# EUROPEAN PATENT APPLICATION

(11) **EP 3 115 960 A1**
(43) Date of publication of application: **11.01.2017**
(21) Application number: 15759048.0
(22) Date of filing: 13.02.2015
(51) Int. Cl.: G06Q 50/10, G06F 13/00

(54) **REMOTE SERVER**

(30) Priority: 07.03.2014 JP 2014045372
(71) Applicant: Yanmar Co., Ltd., Osaka-shi, Osaka 530-8311 (JP)
(72) Inventor: SHINOHARA Yoshihiko, Osaka-shi Osaka 530-8311 (JP); NOBE Akira, Chikugo-shi Fukuoka 833-0055 (JP); TANIMASA Yasuyuki, Osaka-shi Osaka 530-8311 (JP); UEZUMIYA Keisuke, Osaka-shi Osaka 530-8311 (JP)
(74) Representative: Hinkelmann, Klaus
(86) International application number: PCT/JP2015/053893
(87) International publication number: WO 2015/133242

(57) **Abstract**

In a remote server that receives from a work machine or a vessel, machine identification information as information for identifying the work machine or the vessel and predetermined operation data, a service center in charge of the work machine or the vessel is identified based on the machine identification information, a repair part required in the service center and a repair timing of the repair member are determined based on the operation data received from the work machine or the vessel and on any one of a regular maintenance history received as appropriate and the regular maintenance history received from the work machine or the vessel, and the service center is notified that the repair part is required at a timing earlier than the repair timing determined by a predetermined period.

## Description

### Technical Field

The present invention relates to a remote server in a remote monitoring system facilitating management of a repair part for a work machine and the like in a service center in charge of the work machine and the like.

### Background Art

Examples of a configuration of facilitating management of a repair part for a work machine and the like in a service center in charge of the work machine and the like are disclosed in Patent Literature 1 and Patent Literature 2. In a management system disclosed in Patent Literature 1, statistical processing for actual repair/replacement time interval is executed for each part. Data as a result of the statistical processing is compared with operation information on a certain construction machine to determine scheduled repair/replacement timing for a corresponding part in the certain construction machine. In a management system disclosed in Patent Literature 2, a delivery location of a maintenance part, required to be restocked, is determined as a port of call of a vessel where the vessel is scheduled to arrive before a maintenance work is performed with the maintenance part, based on a navigation plan of the vessel and navigation information related to scheduled ports of call.

### Citation List

### Patent Literature

PTL1: Japanese Patent No. 4593055
PTL2: Japanese Patent No. 4909175

### Summary of Invention

### Technical Problem

The management system described in Patent Literature 1, which determines the scheduled repair/replacement timing of a part, lacks a configuration of identifying a stocking location (for example, a service center) where the repair part for repairing is required. The management system described in Patent Literature 2, which determines the port of call of the vessel for the maintenance part required to be restocked based on the operation information of the vessel, also lacks the configuration of identifying the stocking location where the repair part for the repairing is required.

In view of the above, an object of the present invention is to provide a configuration where a stocking location where a repair part for repairing is required can be identified.

### Solution to Problem

To achieve the object described above, the present invention provides a remote server that receives from a work machine or a vessel, machine identification information as information for identifying the work machine or the vessel and predetermined operation data, in which a service center in charge of the work machine or the vessel is identified based on the machine identification information, a repair part required in the service center and a repair timing of the repair member are determined based on the operation data received from the work machine or the vessel and on any one of a regular maintenance history received as appropriate and the regular maintenance history received from the work machine or the vessel, and the service center is notified that the repair part is required at a timing earlier than the repair timing determined by a predetermined period.

As another exemplary aspect of the present invention, remote server further notifies a procurement department and/or a production plant of the repair part and the repair timing and that the repair part is required at the timing earlier than the repair timing by the predetermined period.

### Advantageous Effects of Invention

With the present invention, a stocking location where a repair part for repairing is required can be identified.

### Brief Description of Drawings

[Fig. 1] Fig. 1 is a schematic configuration diagram schematically illustrating a remote monitoring system for remotely monitoring work machines.
[Fig. 2] Fig. 2 is a block diagram illustrating a schematic configuration of the work machine including a remote monitoring terminal device
[Fig. 3] Fig. 3 is a block diagram illustrating a schematic configuration of the remote monitoring terminal device in the work machine.
[Fig. 4] Fig. 4 is a table illustrating specific examples of output elements corresponding to various connection terminals in a case where the work machine is a combine harvester.
[Fig. 5] Fig. 5 is an operation diagram illustrating a procedure of processing of operation data transmission control executed by an operation data transmission control unit in a control unit of the remote monitoring terminal device.
[Fig. 6] Fig. 6 is a flowchart illustrating an example of a control processing executed by the operation data transmission control unit.
[Fig. 7] Fig. 7 is a schematic block diagram illustrating a schematic configuration of a control unit in a remote server provided in a remote monitoring center.
[Fig. 8] Fig. 8 is a schematic diagram illustrating an example of a data structure of a first database storing for each machine identification information, a regular maintenance history, including part identification information and maintenance executed timing information, together with operation data.
[Fig. 9] Fig. 9 is a schematic diagram illustrating an example of a data structure of an operation based maintenance timing set in a storage unit.
[Fig. 10] Fig. 10 is a schematic diagram illustrating an example of a data structure of a second database storing the machine identification information being associated with model information.
[Fig. 11] Fig. 11 is a schematic diagram illustrating an example of a data structure of a preset based maintenance timing set in advance in the storage unit.
[Fig. 12] Fig. 12 is a schematic diagram illustrating an example of a data structure of a third database storing the machine identification information being associated with service center information.
[Fig. 13] Fig. 13 is an explanation diagram illustrating an example of repair timing determination processing of determining a repair part as well as a repair timing and a quantity thereof, based on the operation based maintenance timing.
[Fig. 14] Fig. 14 is a table illustrating examples of the repair part as well as the repair timings and the quantity thereof notified to the service center, together with types of replaced parts.
[Fig. 15] Fig. 15 is a flowchart illustrating an example of control processing executed by the control unit in the remote server in a case where processing is executed through a screen based instruction.
[Fig. 16] Fig. 16 is a flowchart illustrating an example of control processing executed by the control unit in the remote server in a case where monthly batch processing is executed.

### Description of Embodiments

An embodiment of the present invention is described with reference to the attached drawings. In the embodiment, a work machine (for example, an agricultural machine) such as a combine harvester, a tiller, or a rice-trans planter is described as an example of a work machine or a vessel.

### [Overall configuration of remote monitoring system]

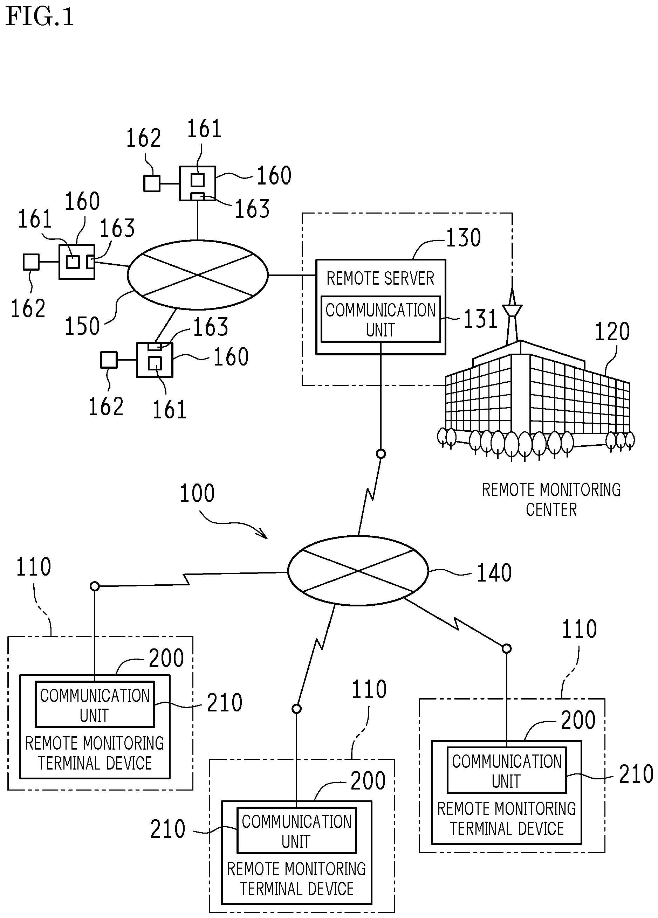

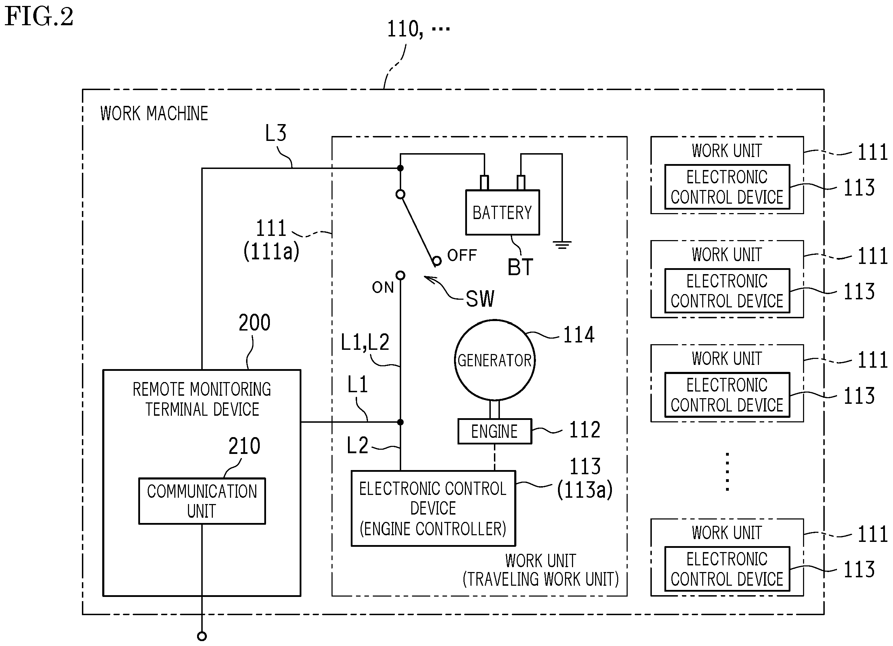

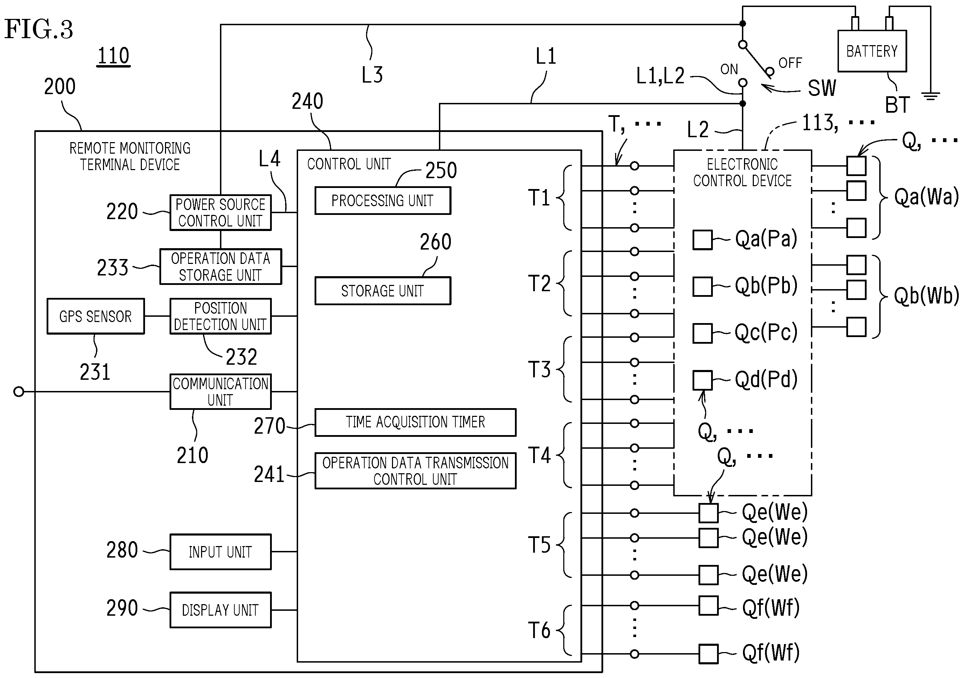

Fig. 1 is a schematic configuration diagram schematically illustrating a remote monitoring system 100 for remotely monitoring work machines 110, .... Fig. 2 is a block diagram illustrating a schematic configuration of each of the work machine 110, ... including a remote monitoring terminal device 200. Fig. 3 is a block diagram illustrating a schematic configuration of the remote monitoring terminal device 200 in the work machine 110.

As illustrated in Fig. 1, the remote monitoring system 100 includes: one or a plurality of (plurality in this example) the work machines 110; the remote monitoring terminal device 200 provided in each of the work machines 110; and a remote server 130 connected to the remote monitoring terminal device 200 through a communication network 140.

The remote server 130 is provided in a remote monitoring center 120 at a location far away from the work machines 110, ..., and collects and accumulates predetermined operation data that is data related to an operation status of the work machine 110. The remote server 130 is connected to terminal devices (more specifically, client computers) 160, ..., such as a personal computer, a tablet computer, or a mobile terminal device, through a network 150 such as a local area network (LAN) or the Internet. The data accumulated is fetched by the terminal devices 160, ... to be usable by a user such as an owner, a dealer, and the like of the work machine 110. The terminal device 160 includes: a control unit 161; an input unit 162 including a keyboard, a pointing device, and the like; and a display unit 163 such as a display. The control unit 161 displays display information and various input screens, based on data transmitted from the remote server 130, on the display unit 163, and receives required information input through the input unit 162.

More specifically, the remote monitoring terminal device 200 and the remote server 130 respectively include communication units 210 and 131 (more specifically, communication modules). The remote monitoring terminal device 200 and the remote server 130 are connected to each other through the communication network 140 with their communication units 210 and 131. Thus, information can be transmitted and received between the remote monitoring terminal device 200 and the remote server 130. With such a configuration, the remote server 130 enables the user in the remote monitoring center 120 to remotely monitor the work machines 110, ....

The communication network 140 may be a wired communication network, a wireless communication network, and a combination of the wired communication network and the wireless communication network. A typical example of the communication network 140 includes a public line network that is provided by a telecommunications carrier for communications between terminal devices such as a fixed phone and a mobile phone.

As illustrated in Fig. 2, the work machines 110, ... each include one or a plurality of (plurality in this example) work units 111, ... and the remote monitoring terminal device 200. The work units 111, ... in an example where the work machine is a combine harvester may include a traveling work unit, a reaping work unit, a threshing work unit, and the like.

The work units 111, ... each includes a corresponding one of electronic control devices (more specifically, controllers) 113, .... The electronic control devices 113, ... each issue an instruction to various actuators (not illustrated) so that control is performed for achieving an appropriate driving state of each of the work units 111, .... The electronic control devices 113, ... transmit and receive data to and from each other based on a controller area network (CAN) standard.

More specifically, the electronic control devices 113, ... each operate to control the driving state of a corresponding one of the work units 111, ... based on detected value information (signal) and ON/OFF information on various switches detected by various sensors in the corresponding one of the work units 111, .... The electronic control devices 113, ... each determine whether abnormality such as a failure of the work machine 110 has occurred, as appropriate. When the abnormality occurs, the electronic control device 113 generates error information (more specifically, an error code) corresponding to the abnormality.

A work unit (traveling work unit 111a), which is one of the work units 111, ... that operates an engine 112, includes: the engine 112; the electronic control device 113 (engine controller 113a) that controls the entire engine by monitoring the engine speed and a load condition of the engine 112, and instructing optimum injection pressure and injection timing to a fuel system; a generator 114; and a starting switch SW, and is provided with a battery BT. The electronic control device 113 (engine controller 113a) performs operation control for the work unit 111 (traveling work unit 111a), as well as driving start/stop operation, and driving state control by driving the engine 112.

While the engine 112 is operating, the battery BT in the work unit 111 (traveling work unit 111a) is charged as appropriate by power supplied from the generator 114.

The starting switch SW of the work unit 111 (traveling work unit 111a) is a selector switch for selectively switching between a power ON state and a power OFF state. In the power ON state, the battery BT supplies power to a control unit 240 (see Fig. 3) of the remote monitoring terminal device 200 and the electronic control device 113 (engine controller 113a). In the power OFF state, the power supply from the battery BT to the control unit 240 of the remote monitoring terminal device 200 and the electronic control device 113 (engine controller 113a) is cut off.

More specifically, the battery BT is connected to both a power source connection line L1 and a power source connection line L2 through the starting switch SW. The power source connection line L1 is connected to the control unit 240 of the remote monitoring terminal device 200. The power source connection line L2 is connected to the electronic control device 113 (engine controller 113a).

In this example, the starting switch SW serves as what is known as a key switch and has an "ON" terminal as a connection terminal for the power source connection lines L1 and L2 and an "OFF" terminal as a terminal in a state where the starting switch SW is in an OFF state.

Regardless of whether the starting switch SW is in an ON state or the OFF state, the battery BT is connected to a power source control unit 220 (see Fig. 3) of the remote monitoring terminal device 200 through a power source connection line L3.

### [Remote monitoring terminal device]

As illustrated in Fig. 3, the remote monitoring terminal device 200 includes: the communication unit 210; the control unit 240 that transmits and receives data through communications, various types of input/output control, and calculation processing control; the power source control unit 220 that supplies power to the control unit 240; and a plurality of connection terminals T, ... to which operation data on an operation status of the work machine 110 is input.

### (Communication unit)

The communication unit 210 can communicate with the communication unit 131 of the remote server 130 in the remote monitoring center 120 (see Fig. 1) under a common communication protocol. The data transmitted and received through communications is converted by the communication unit 210 to be suitable for the communication protocol. The communication unit 210 transmits operation data on the work machine 110 and the like, acquired by the control unit 240, to the remote server 130.

### (Power source control unit)

The power source control unit 220 is connected to the battery BT regardless of whether the starting switch SW is in the OFF state or the ON state. More specifically, the power source control unit 220 has an input side power source line (not illustrated) connected to the battery BT through the power source connection line L3. Thus, the battery BT constantly supplies power to the power source control unit 220.

The control unit 240 has a power source line (not illustrated) connected to an output side power source line (not illustrated) of the power source control unit 220 through a power source connection line L4.

### (Position detection unit)

In the present embodiment, the remote monitoring terminal device 200 further includes: a GPS sensor (an example of a position sensor) 231 that receives electric waves from a Global Positioning System (GPS) satellite; a position detection unit 232 that detects the positional information and the like on the work machine 110 based on the electric waved received by the GPS sensor 231; and an operation data storage unit 233 that temporarily stores various types of data including the positional information detected by the position detection unit 232.

The GPS sensor 231 receives electric waves (information including the world standard time) from the GPS satellite. Here, the world standard time is Universal Time, Coordinated (UTC).

The position detection unit 232 can detect information on a current location of the work machine 110, as well as speed information on the work machine 110 and azimuth information on the work machine 110. Thus, the positional information includes information on the latitude, the longitude, the speed, and the azimuth of the work machine 110.

More specifically, the position detection unit 232, the GPS sensor 231, and the GPS satellite form a GPS satellite system (positioning system).

The operation data storage unit 233 includes a nonvolatile memory such as a flash memory. The operation data storage unit 233 is connected to the power source control unit 220 and is constantly supplied with power from the battery BT.

### (Control unit)

The control unit 240 includes: a processing unit 250 including a microcomputer such as a central processing unit (CPU); a storage unit 260 including a nonvolatile memory, such as a read only memory (ROM), and a volatile memory such as a RAM; and a time acquisition timer 270 having a clock function for obtaining date and time information on the remote monitoring terminal device 200.

The control unit 240 performs operation control on various components, with the processing unit 250 loading a control program, stored in the ROM of the storage unit 260 in advance, onto the RAM of the storage unit 260 and executing the control program.

### (Connection terminal)

The plurality of (70 in this example) connection terminals T, ... are a plurality of types of connection terminals connected to output elements Q that output data on the operation status of the work machine 110. In the present embodiment, the connection terminals T, ... include: one or more (32 in this example) first connection terminals T1, ...; one or more (20 in this example) second connection terminals T2, ...; one or more (four in this example) third connection terminals T3, ...; one or more (four in this example) fourth connection terminals T4, ...; one or more (eight in this example) fifth connection terminals T5, ...; and one or more (two in this example) sixth connection terminals T6, ....

The first connection terminals T1, ..., second connection terminals T2, ..., third connection terminals T3, ..., and the fourth connection terminals T4, ... are connected to the control unit 240. The first connection terminals T1, ...and the second connection terminals T2 are each connected to a corresponding one of the output elements Q of the work units 111, ... through a corresponding one of the electronic control devices 113, .... The fifth connection terminals T5, ... and the sixth connection terminals T6, ... are connected to the control unit 240, and are each directly connected to a corresponding one of the output elements Q, ... of the work units 111, ....

The first connection terminals T1, ... are connected to output elements Qa, ... that output binary information (more specifically a binary signal) such as ON/OFF information (more specifically, contact information with a value 0 or 1) and error state information (more specifically, information indicating whether there is an error with a value 0 or 1) indicating whether there is an abnormality such as a failure, and thus receive the binary information from the output elements Qa, .... In this example, the binary information is transmitted as bit data compatible with the CAN.

Examples of the output elements Qa, ... that output the binary information include: various switches Wa, ... that are connected to an input system of the electronic control devices 113, ..., and output ON/OFF information on the operation status of the work machine 110; and an output control unit Pa provided to each of the electronic control devices 113, ... and outputs error state information indicating whether there is an abnormality such as a failure in a corresponding one of the work units 111, ....

More specifically, when the output elements Qa, ... are the various switches Wa, ..., the first connection terminals T1, ... receive the ON/OFF information from the various switches Wa, ... via the electronic control devices 113, .... When the output elements Qa, ... are the output control unit Pa, the first connection terminals T1, ... each receive the error state information from the output control unit Pa in a corresponding one of the electronic control devices 113, ....

The second connection terminals T2, ... are connected to output elements Qb, ... that output detected value information (more specifically, a multivalued digital signal) such as numerical value data indicating a value as a result of measuring (detecting) a predetermined physical quantity, an error code indicating a detail of the abnormality such as a failure, and a voltage value and the like of the battery BT. Thus, the second connection terminals T2, ... receive the detected value information from the output elements Qb, .... In this example, the detected value information is transmitted as numerical value data compatible with the CAN.

Examples of the output elements Qb, ... that output the detected value information include: various sensors Wb, ... that are connected to the input system of the electronic control devices 113, ... and detect the operation status of the work machine 110; and an output control unit Pb provided in the electronic control device 113 (engine controller 113a) and outputs the voltage value of the battery BT.

More specifically, when the output elements Qb, ... are the various sensors Wb, ..., the second connection terminals T2, ... receive the numerical value data from the various sensors Wb, ... via the electronic control devices 113, .... When the output elements Qb, ... is the output control unit Pb, the second connection terminals T2, ... receive the voltage value of the battery BT from the output control unit Pb in the electronic control device 113 (engine controller 113a).

The third connection terminals T3, ... are connected to output elements Qc, ... that output integrated information such as integrated time from integrate time meter (hour meter) that measures integrated time obtained by integrating operating time (driving time) of components such as the engine 112 related to the driving, and thus receive the integrated information from the output elements Qc, .... In this example, the integrated information is transmitted as integrated data compatible with the CAN.

Examples of the output elements Qc, ... that output the integrated information include an output control unit Pc that is provided in the electronic control device 113 (engine controller 113a), and outputs the integrated time obtained by integrating the operating time of the engine 112 (the operating time of the work machine 110) between the point where the engine 112 starts driving (a point where an ON operation for the starting switch SW is received) and a point where the engine 112 stops driving (a point where an OFF operation for the starting switch SW is received).

More specifically, when the output elements Qc, ... are the output control unit Pc, the third connection terminals T3, ... receive the integrated time related to the engine 112 from the output control unit Pc in the electronic control device 113 (engine controller 113a).

The fourth connection terminals T4, ... are connected to output elements Qd, ... that output error information related to the CAN communication protocol, and receive the error information from the output elements Qd, ....

Examples of the output elements Qd, ... that output the error information include an output control unit Pd provided in each of the electronic control devices 113, ..., recognizes a specification error related to the CAN communication protocol, and outputs the error information corresponding to the error.

More specifically, when the output elements Qd, ... are the output control unit Pd, the fourth connection terminals T4, ... receive the error information from the output control unit Pd in each of the electronic control devices 113, ....

The fifth connection terminals T5, ... are connected to output elements Qe, ... that output the binary information, and thus receive the binary information from the output elements Qe, ....

Examples of the output elements Qe, ... that output the binary information include various switches We, ... that output ON/OFF information on the operation status of the work machine 110.

More specifically, when the output elements Qe, ... are the various switch We, ..., the fifth connection terminals T5, ... directly receive the ON/OFF information from the various switches We, .... The fifth connection terminals T5, ... may be used when the work units 111, ... include the respective electronic control devices 113 ..., but is useful mainly when the work units 111, ... do not include the respective electronic control devices 113 ....

The sixth connection terminals T6, ... are connected to output elements Qf, ... that output detected value information (more specifically, an analog signal) on numerical value data indicating a value obtained by measuring (detecting) a predetermined physical quantity (for example, the voltage value of the battery BT and temperature of a substrate (not illustrated) mounted on the electronic control devices 113, ...) and thus receive the detected value information from the output elements Qf, ....

Examples of the output elements Qf, ... that output the detected value information include various sensors Wf, ... that detect the operation status of the work machine 110.

More specifically, when the output elements Qf, ... are the various sensors Wf, ..., the sixth connection terminals T6, ... directly receive the numerical value data from the various sensors Wf, ....

As illustrated in Fig. 3, the control unit 240 further includes an operation data transmission control unit 241, an input unit 280, and a display unit 290 that are described later.

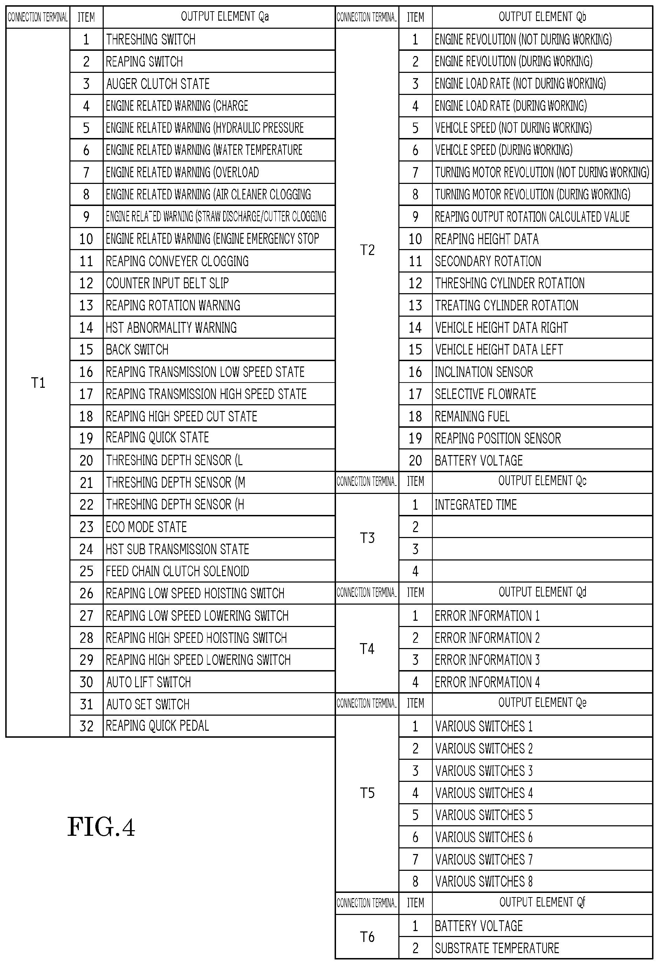

Fig. 4 is a table illustrating specific examples of the output elements Qa, ... to Qf, ... corresponding to the various connection terminals T1, ... to T6, ... in the case where the work machine 110 is a combine harvester.

As illustrated in Fig. 4, the output elements Qa, ... connected to the first connection terminals T1, ... input to the first connection terminals T1, ..., the binary information on 32 items including: threshing switch; reaping switch; and charge, hydraulic pressure, water temperature, overload, air cleaner clogging, straw discharge/cutter clogging, and emergency stop related to the engine. The output elements Qb, ..., connected to the second connection terminals T2, ..., input to the second connection terminals T2, ..., the detected value information on 20 items including: revolutions of the engine 112 per unit time at the time of working and not working; an engine load rate indicating the level of a load on the engine 112 at the time of working and not working; the vehicle speed at the time of working and not working; and revolutions of a turning motor per unit time at the time of working and not working. The output elements Qc, ..., connected to the third connection terminals T3, ..., input to the third connection terminals T3, ..., the integrated information on four items (the integrated information on one item in this example). The output elements Qd, ..., connected to the fourth connection terminals T4, ..., input to the fourth connection terminals T4, ..., the error information on four items. The output elements Qe, ..., connected to the fifth connection terminals T5, ..., input to the fifth connection terminals T5, ..., the binary information on eight items. The output elements Qf, ..., connected to the sixth connection terminals T6, ..., input to the sixth connection terminals T6, ..., the detected value information on two items (more specifically, the battery voltage and the substrate temperature).

The control unit 240 further includes the operation data transmission control unit 241 that transmits operation data to the remote server 130.

### [Operation data transmission control]

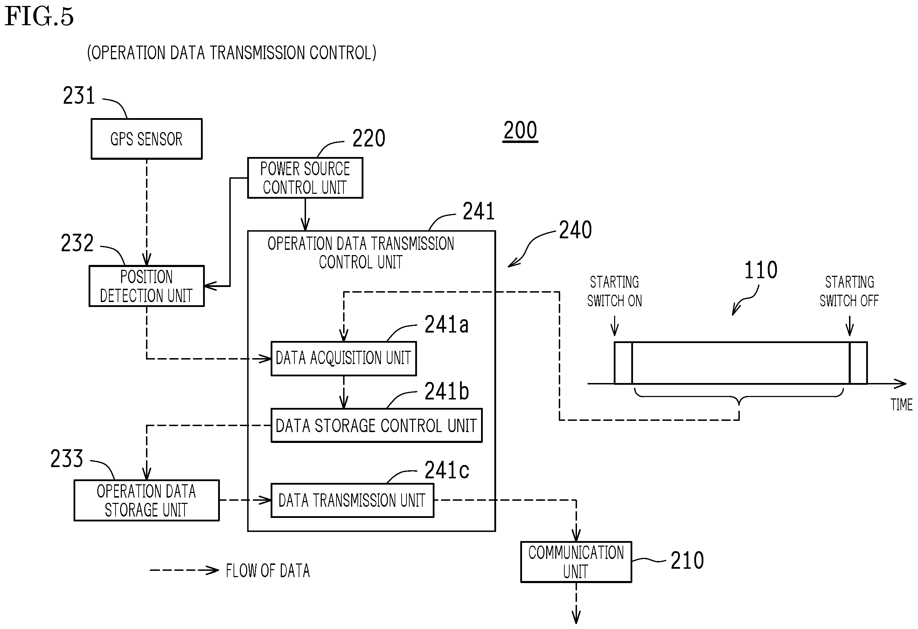

Fig. 5 is an operation diagram schematically illustrating a procedure of processing of operation data transmission control executed by the operation data transmission control unit 241 in the control unit 240 of the remote monitoring terminal device 200.

As illustrated in Fig. 5, the operation data transmission control unit 241 of the remote monitoring terminal device 200 acquires the operation data (see Fig. 4) at an acquisition date and time (more specifically, world standard year (A.D), month, day, hour, minute, and second) once in every predetermined interval (for example, once in every 30 seconds), and stored the operation data in the operation data storage unit 233. The operation data relates to the operation status of the work machine 110 input through the connection terminals T, ..., while the work machine 110 is operating.

The operation data transmission control unit 241 transmits operation data, stored once in every predetermined interval, to the remote server 130 (see Fig. 1).

More specifically, the operation data transmission control unit 241 functions as an operation unit including: a data acquisition unit 241a that acquires the operation data once in every predetermined interval (for example, 30 seconds) while the starting switch SW is ON; and a data storage control unit 241b that temporarily stores the operation data, acquired by the data acquisition unit 241a, in the operation data storage unit 233.

The operation data transmission control unit 241 also functions as an operation unit including a data transmission unit 241c that transmits the operation data, stored in the operation data storage unit 233, from the communication unit 210 to the remote server 130 (see Fig. 1).

The control unit 240 is turned OFF by the power source control unit 220 not when the OFF operation for the starting switch SW is performed, but after the operation data, stored in the operation data storage unit 233 by the data storage control unit 241b, is transmitted to the remote server 130. The remote monitoring terminal device 200 converts the operation data into a format compatible with the communication protocol supported by the communication unit 131 of the remote server 130, with the communication unit 210, and then transmits the operation data to the remote server 130 through the communication network 140 and the communication unit 131.

### (Example of processing executed by operation data transmission control unit)

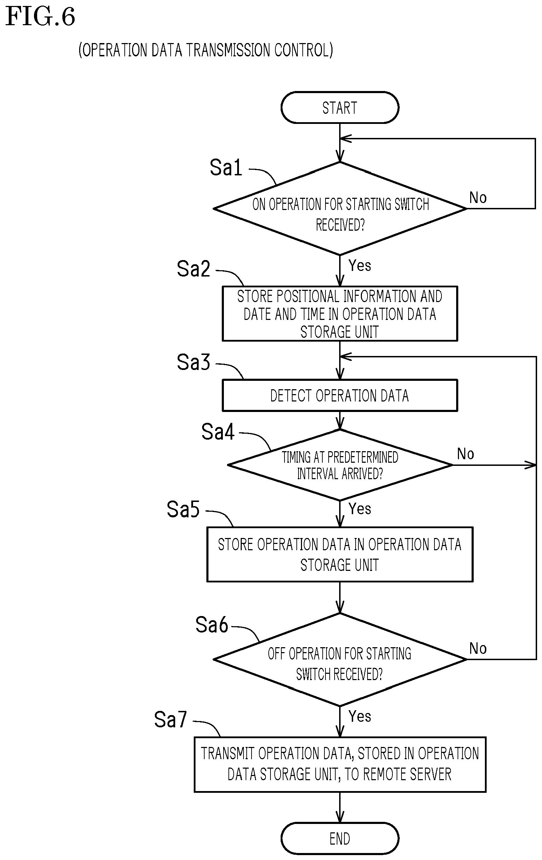

Next, an example of processing executed by the operation data transmission control unit 241 is described below with reference to Fig. 6.

Fig. 6 is a flowchart illustrating an example of control processing executed by the operation data transmission control unit 241.

In the flowchart illustrated in Fig. 6, upon receiving the ON operation for the starting switch SW (step Sa1: Yes), the operation data transmission control unit 241 acquires the positional information on the work machine 110 and the date and time with the GPS sensor 231 and the position detection unit 232 (see Figs. 3 and 5), and stores the positional information and the date and time in the operation data storage unit 233 (step Sa2).

Then, the operation data transmission control unit 241 detects the operation data on the work machine 110 with the output elements Q, ... (step Sa3), and determines whether a timing, at the predetermined interval (30 seconds in this example), has arrived (step Sa4). When the timing once in the predetermined interval has not arrived yet (step Sa4: No), the processing proceeds to step Sa3. On the other hand, when the timing of the predetermined interval has arrived in step Sa4 (step Sa4: Yes), the operation data transmission control unit 241 stores the operation data in the operation data storage unit 233 (step Sa5).

Then, the operation data transmission control unit 241 determines whether the OFF operation for the starting switch SW has been received (step Sa6). The processing proceeds to step Sa3 when the OFF operation has not been received (step Sa6: No). On the other hand, when the OFF operation has been received in step Sa6 (step Sa6: Yes), the operation data transmission control unit 241 transmits the operation data, stored in the operation data storage unit 233, to the remote server 130 (step Sa7), and the processing is terminated.

### [Remote server]

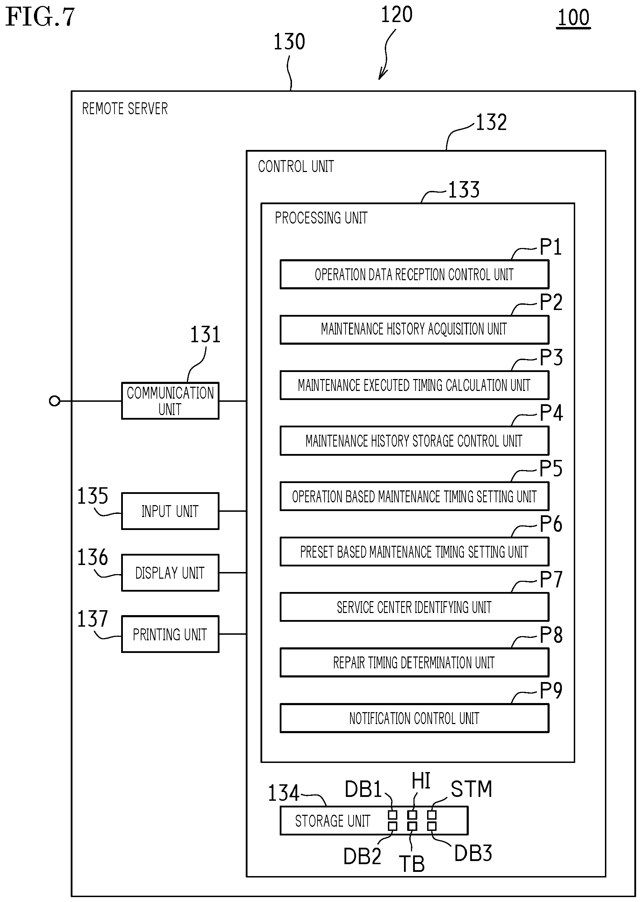

Fig. 7 is a block diagram illustrating a schematic configuration of a control unit 132 in the remote server 130 provided in the remote monitoring center 120.

As illustrated in Fig. 7, the remote server 130 provided in the remote monitoring center 120 includes: the communication unit 131; and the control unit 132 that transmits and receives data through communications, performs various input/output controls, and controls calculation processing.

### (Communication unit)

The communication unit 131 can communicates with the communication unit 210 of the remote monitoring terminal device 200 (see Figs. 1 to 3) under the common communication protocol. The data transmitted and received through communications is converted by the communication unit 131 to be compatible with the communication protocol. The communication unit 131 receives the operation data described above.

### (Control unit)

The control unit 132 includes: a processing unit 133 including a microcomputer such as a CPU; and a storage unit 134 including a ROM and a volatile memory such as a

### RAM.

The control unit 132 performs operation control on various components, with the processing unit 133 loading a control program, stored in the ROM of the storage unit 134 in advance, onto the RAM of the storage unit 134 and executing the control program.

In a service center, in charge of the work machines 110, ..., without repair parts secured in advance, when a repair part needs to be replaced due to failure and the like, the repair part is ordered. Thus, a maintenance service is delayed by a period for waiting for the repair part to arrive. This is especially serious when the repair part is a key part that is not frequently replaced but its failure stops the machine, or a part that requires a long time to arrive after the order. Stocking as many repair parts as possible may seem like a solution, but this requires a higher stocking cost and a larger stocking space, especially when the repair part is expensive or is a large part that takes up a large portion of the stocking space. All things considered, the service center is required to appropriately secure required repair part in advance.

To achieve this, the control unit 132 in the remote server 130 stores a regular maintenance history input thereto as appropriate, or received from the work machine 110.

The concept of the service center not only includes service centers run by manufacturers, and also includes authorized distributors authorized by the manufacturers.

The regular maintenance is a maintenance (such as replacement of a certain part (genuine part) at a certain timing, as well as cleaning, adjustment, and greasing for a certain portion at a certain timing) performed by a manufacturer side (service center).

More specifically, the control unit 161, in the terminal device 160 (see Fig. 1) of the service center connected to the remote server 130 through the network 150, receives the regular maintenance history together with machine identification information, through a manual input operation (more specifically a key input operation) on the input unit 162. The regular maintenance history includes: part identification information (more specifically, a part code) for identifying a part; and maintenance content information (maintenance content code indicating replacement, cleaning, adjustment, greasing, and the like). The machine identification information (for example, a terminal phone number) is information for identifying the work machine 110. Then, the control unit 161 transmits the regular maintenance history and the machine identification information thus received to the remote server 130.

The remote monitoring terminal device 200 (see Fig. 3) in the work machine 110 further includes: the input unit 280 through which the part identification information and the maintenance content information, serving as the regular maintenance history, are input; and the display unit 290 that displays input information input through the input unit 280. The control unit 240 receives the regular maintenance history through a manual input operation (more specifically, key input operation) on the input unit 280, and transmits to the remote server 130, the regular maintenance history thus received together with the machine identification information (for example, a terminal phone number).

The remote server 130 further includes: an input unit 135 including a keyboard, a pointing device, and the like; a display unit 136 such as a display; and a printing unit 137 such as a printer. The control unit 132 displays an input screen on the display unit 136, receives required information input through the input unit 135, or print information, on which print processing has been executed, by the printing unit 137.

The control unit 132 in the remote server 130 receives the regular maintenance history, including the part identification information and the maintenance content information, together with the machine identification information (for example a terminal phone number), through a manual input operation (more specifically a key input operation) on the input unit 135.

The input unit 162 in the terminal device 160, the input unit 280 in the remote monitoring terminal device 200, and the input unit 135 in the remote server 130 may each include a reading device (for example, a barcode reading device) that reads the part identification information (more specifically, the part code), and the control unit 161 in the terminal device 160, the control unit 240 in the remote monitoring terminal device 200, and the control unit 132 in the remote server 130 may receive the part identification information read by the input unit 162, the input unit 280, and the input unit 135. In the remote monitoring system 100, the input of the regular maintenance history may be performed in at least one of the terminal device 160, the remote monitoring terminal device 200, and the remote server 130.

The control unit 132 (see Fig. 7) in the remote server 130 acquires the regular maintenance history, received by the input unit 162, the input unit 280, or the input unit 135, together with the machine identification information (for example, a terminal phone number).

The control unit 132 calculates maintenance executed timing information by calculating integrated time at the point when the regular maintenance is performed on a part corresponding to the part identification information, by using the operating time (integrated time) of the work machine 110.

The integrated time at the maintenance executed timing can be calculated from the operating time (integrated time) of the work machine 110 at the point when the regular maintenance is executed. When the regular maintenance is executed for the second time and after, the integrated time can be calculated from the operating time (integrated time) stored in the storage unit 134, for each machine identification information and for each part identification information, when the regular maintenance is executed in the past.

The control unit 132 may acquire the integrated time at the point of executing the regular maintenance as follows. Specifically, the operating time (integrated time) of the work machine 110, displayed on a display screen of the display unit 290 in the work machine 110 at the point when the regular maintenance is executed, may be acquired through a manual input operation on the input unit 162, the input unit 280, or the input unit 135. Alternatively, the operating time (integrated time) of the work machine 110 at the point when the part identification information is acquired from the operation data received from the remote monitoring terminal device 200 may be automatically acquired.

The control unit 132 stores the part identification information acquired and the maintenance executed timing information calculated as the regular maintenance history for each machine identification information (for example, a terminal phone number).

The control unit 132 stores for each machine identification information (for example, a terminal phone number), the operation data at a point close to the integrated time (for example, operation data received in a period between the integrated time at the point where a part is replaced and a point earlier than the integrated time by a predetermined period) corresponding to the part replacement time information on part replacement corresponding to the maintenance executed timing information in the regular maintenance history.

Components in Fig. 7 that are not described above will be described below.

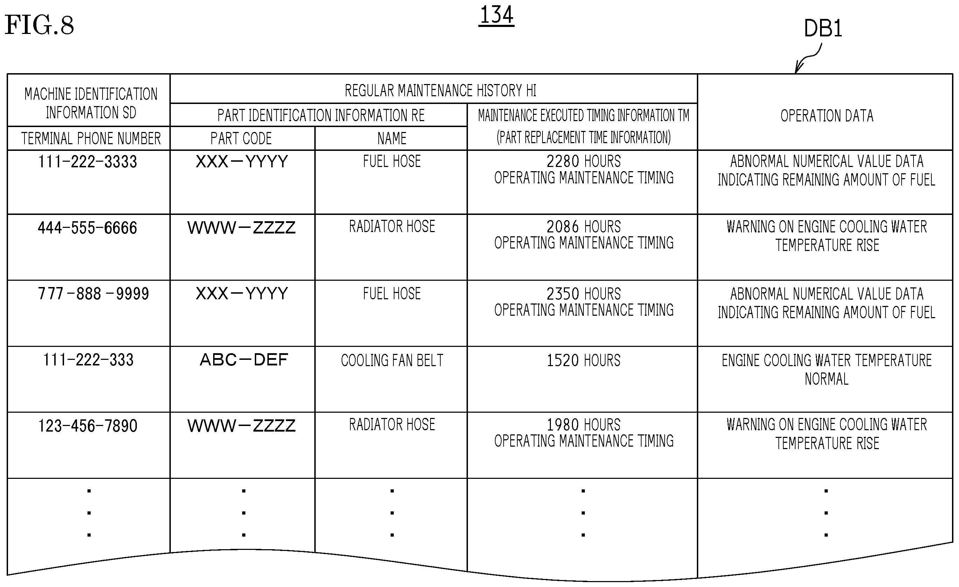

Fig. 8 is a schematic diagram illustrating an example of a data structure of a first database DB1 storing for each machine identification information SD, a regular maintenance history HI, including part identification information RE and maintenance executed timing information TM, together with operation data.

As illustrated in Fig. 8, in the first database DB1 in the storage unit 134, the part identification information RE and the maintenance executed timing information TM are stored as the regular maintenance history HI for each machine identification information SD. Furthermore, the control unit 132 automatically stores operation data (for example, an error code indicating the detail of the abnormality, a warning related to the ON/OFF information (more specifically, the contact information with a value 0 or 1) from various sensors, and an abnormality of the numerical value data from the various sensors detecting the operation status of the work machine 110) which is one of pieces of operation data, received from the work machine 110, at a point close to the integrated time corresponding to the part identification information RE and the maintenance executed timing information TM (part replacement time information) in the first database DB1, while being associated with the part identification information RE and the part replacement time information.

The control unit 132 identifies the service center based on the machine identification information SD on the work machines 110, .... Then, the control unit 132 determines a repairing timing of a repair part required in the service center based on the regular maintenance history HI and the operation data received from the work machines 110, ... that have been stored (more specifically, by determining that the replacement of the repair part is supposed to be required). Finally, the control unit 132 notifies the identified service center that the repair part will be required at a timing that is earlier than the determined repair timing by a predetermined period.

In the present embodiment, the control unit 132 determines the repair timing of a repair part required in the service center as follows. More specifically, the control unit 132 determines a repair timing of a repair part as an unregularly replaced part that is not replaced on a regular basis, based on an operation based maintenance timing STM1 (see

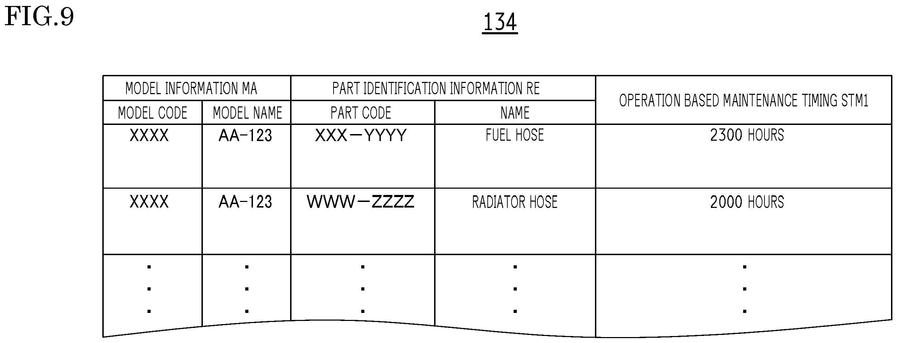

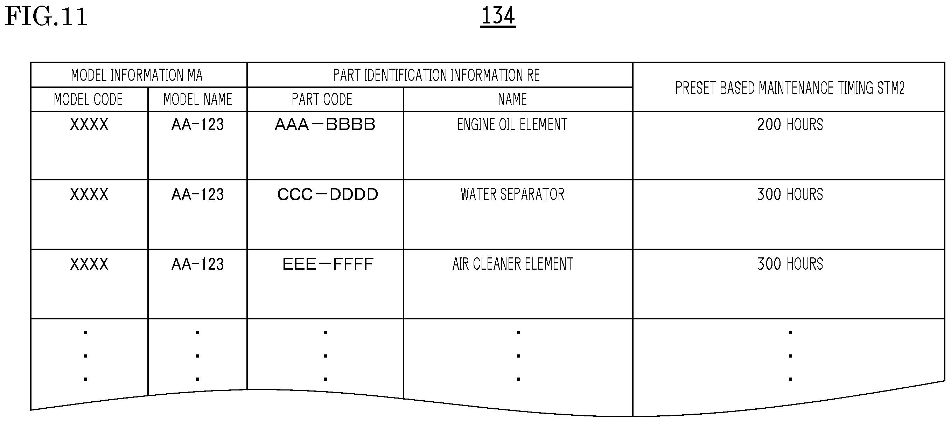

Fig. 9 described below) at which a replacement has been determined to be performed, due to a failure, from the regular maintenance history HI stored and the operation data received from the work machines 110, .... The control unit 132 determines the repair timing of a repair part as a regularly replaced part, determined in advance to be replaced on a regular basis, based on a preset based maintenance timing STM2 (see Fig. 11 described below) set in advance.

More specifically, as illustrated in Fig. 7, the control unit 132 includes an operation data reception control unit P1, a maintenance history acquisition unit P2, a maintenance executed timing calculation unit P3, a maintenance history storage control unit P4, an operation based maintenance timing setting unit P5, a preset based maintenance timing setting unit P6, a service center identifying unit P7, a repair timing determination unit P8, and a notification control unit P9.

The operation data reception control unit P1 receives the operation data, transmitted from the operation data transmission control unit 241 of each of the work machines 110, ..., for each machine identification information SD (for example, a terminal phone number), and stores the operation data in the storage unit 134.

The maintenance history acquisition unit P2 acquires the regular maintenance history HI, including the part identification information RE, received through the input unit 162, the input unit 280, or the input unit 135, together with the machine identification information SD on the work machine 110 on which the regular maintenance has been executed.

The maintenance executed timing calculation unit P3 calculates the integrated time of the maintenance part corresponding to the part identification information in the machine identification information acquired by the maintenance history acquisition unit P2, as the maintenance executed timing information TM, from the operating time (integrated time) of the work machine 110 at the point when the regular maintenance is executed.

The maintenance history storage control unit P4 stores in the storage unit 134 for each machine identification information SD on the work machine 110 on which the regular maintenance has been executed, the regular maintenance history HI (see Fig. 8), including the part identification information RE, acquired by the maintenance history acquisition unit P2 and the maintenance executed timing information TM calculated by the maintenance executed timing calculation unit P3, together with operation data (see Fig. 8) that is one of pieces of the operation data received by the operation data reception control unit P1 that corresponds to the part identification information RE and the maintenance executed timing information TM (part replacement time information).

The operation based maintenance timing setting unit P5 sets, for each model information MA (more specifically, a model code and a model name of the work machine 110), the operation based maintenance timing STM1 (see Fig. 9), indicating a timing at which the unregularly replaced part should be replaced, obtained from the part replacement time information corresponding to the part identification information RE in the regular maintenance history HI, stored in the storage unit 134 by the maintenance history storage control unit P4, and from the operation data received from the work machines 110, ... by the operation data reception control unit P1.

For example, the operation based maintenance timing setting unit P5 sets (stores) an operating maintenance timing and the operation based maintenance timing STM1 (see Fig. 9) in the storage unit 134 for each machine identification information SD. The operating maintenance timing is one of pieces of the part replacement time information each corresponding to the part identification information RE in the regular maintenance history HI that corresponds to the part identification information RE at the time of an abnormality that is at least one selected from the error code indicating the content of an abnormality, the warning related to the ON/OFF information (more specifically, the contact information with a value 0 or 1) from various sensors, and an abnormality of the numerical value data from the various sensors detecting the operation status of the work machine 110 (in the example illustrated in Fig. 8, abnormalities such as [abnormal numerical value data indicating remaining amount of fuel] of XXX-YYYY [fuel hose] at the time of part replacement at the points of 2280 hours, 2350 hours, ..., and [warning on engine cooling water temperature rise] of WWW-ZZZZ [radiator hose] at the time of part replacement at the points of 2086 hours, 1980 hours, ...). The operation based maintenance timing STM1 (see Fig. 9) is time obtained as an average (for example, 2300 hours) of operating maintenance timings (for example, 2280 hours, 2350 hours, ...) of the same part identification information RE (for example, the XXX-YYYY [fuel hose]). An ABC-DEF [cooling fan belt] in Fig. 8 has operation data [engine cooling water temperature normal]. Thus, the operation based maintenance timing setting unit P5 does not determine that the belt has been replaced by failure, and does not regard its part replacement time information (1520 hours) as the operation based maintenance timing STM1.

Fig. 9 is a schematic diagram illustrating an example of a data structure of the operation based maintenance timing STM1 set in the storage unit 134.

As illustrated in Fig. 9, in the storage unit 134, the operation based maintenance timings STM1 (the operation based maintenance timings such as 2300 hours and 2000 hours in this example) corresponding to the part identification information RE (repair parts such as the XXX-YYYY [fuel hose] and the WWW-ZZZZ [radiator hose] in this example) are set (stored) for each model information MA.

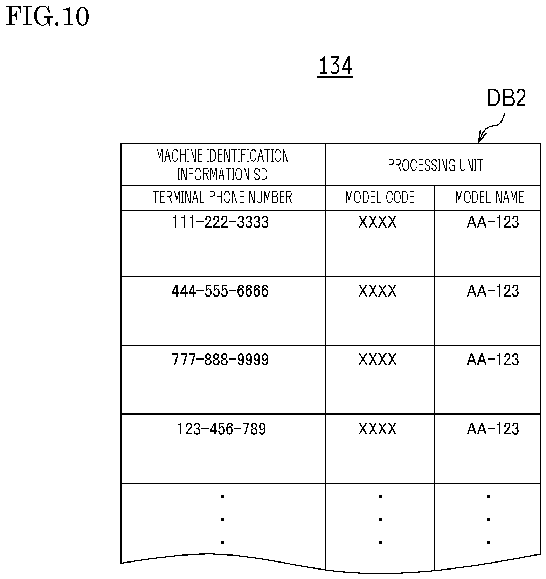

Fig. 10 is a diagram schematically illustrating an example of a data structure of a second database DB2 storing the machine identification information SD being associated with the model information MA.

As illustrated in Fig. 10, in the second database DB2 in the storage unit 134, the model information MA (more specifically, the model code and the model name of the work machine 110) is stored in advance while being associated with the machine identification information SD (a terminal phone number in the example illustrated in Fig. 10). The control unit 132 can recognize the model information MA by referring to the second database DB2 in the storage unit 134, with the machine identification information SD.

The preset based maintenance timing setting unit P6 sets (stores) the preset based maintenance timing STM2 (see Fig. 11), indicating the timing at which the regularly replaced part should be replaced at a predetermined regular maintenance timing, in the storage unit 134 in advance for each model information MA. For example, the preset based maintenance timing STM2 may be input through a manual input operation.

Fig. 11 is a schematic diagram illustrating an example of a data structure of the preset based maintenance timing STM2 set in advance in the storage unit 134.

As illustrated in Fig. 11, in the storage unit 134, the preset based maintenance timing STM2 (in this example, preset based maintenance timing as part replacement timings such as 200 hours, 300 hours, and 300 hours) corresponding to the part identification information RE (in this example, repair parts such as an AAA-BBBB [engine oil element], a CCC-DDDD [water separator], and an EEE-FFFF [air cleaner element]) is set (stored) in advance for each model information MA.

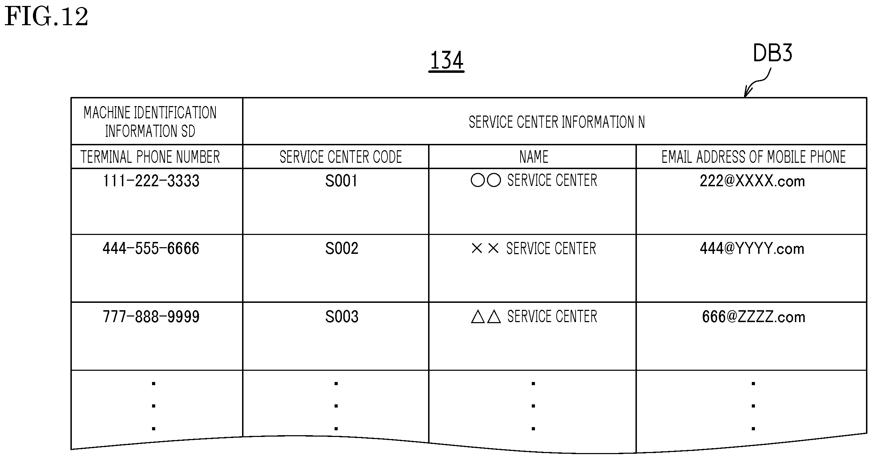

Fig. 12 is a diagram schematically illustrating an example of a data structure of a third database DB3 storing the machine identification information SD being associated with service center information N.

As illustrated in Fig. 12, in the third database DB3 in the storage unit 134, the service center information N (in the example illustrated in Fig. 12, a service center code, its name, an email address of a mobile phone used by a staff such as a service man in charge of the work machine 110) is stored in advance while being associated with the machine identification information SD (in the example illustrated in Fig. 12, a terminal phone number). The control unit 132 can recognize the service center information N by referring to the third database DB3 in the storage unit 134 with the machine identification information SD.

As described above, the service center can be identified with the service center information N set (stored) while being associated with the machine identification information SD. For example, "S001" (OO service center) and an email address of a mobile phone used by a staff can be identified with the service center information N acquired by the third database DB3, from the terminal phone number "111-222-333" set for the remote monitoring terminal device 200 in the work machine 110.

As illustrated in Fig. 12, the service center identifying unit P7 uses the service center information N set in advance while being associated with the machine identification information SD to identify the service center information N from the machine identification information SD (for example, a terminal phone number) for which the service center information N is to be obtained.

More specifically, the service center identifying unit P7 identifies the service center information N that matches the machine identification information SD in the third database DB3 in the storage unit 134.

The repair timing determination unit P8 calculates unit integrated time per unit days from the past integrated time of the work machine 110, and calculates with the unit integrated time thus calculated, one or a plurality of predetermined counting periods (more specifically, a certain counting period) in which the prospective quantity of the repair part is counted, as the repair timing.

The repair timing determination unit P8 determines for each service center information N identified by the service center identifying unit P7, a repair part (the repair part as an unregularly replaced part required in the service center) corresponding to the operation based maintenance timing STM1 (see Fig. 9), as one of the operation based maintenance timings STM1 set by the operation based maintenance timing setting unit P5 that is within the counting period thus calculated, as well as a repair timing (in this example, the counting period) thereof and the quantity of the repair part required in the work machine 110 at the repair timing.

The repair timing determination unit P8 also determines for each service center information N identified by the service center identifying unit P7, a repair part (the repair part as a regularly replaced part required in the service center) corresponding to the preset based maintenance timing STM2 (see Fig. 11) as one of the preset based maintenance timings STM2 set by the preset based maintenance timing setting unit P6 that is within the counting period thus calculated, a repair timing (in this example, the counting period) thereof and the quantity of repair part required in the work machine 110 at the repair timing.

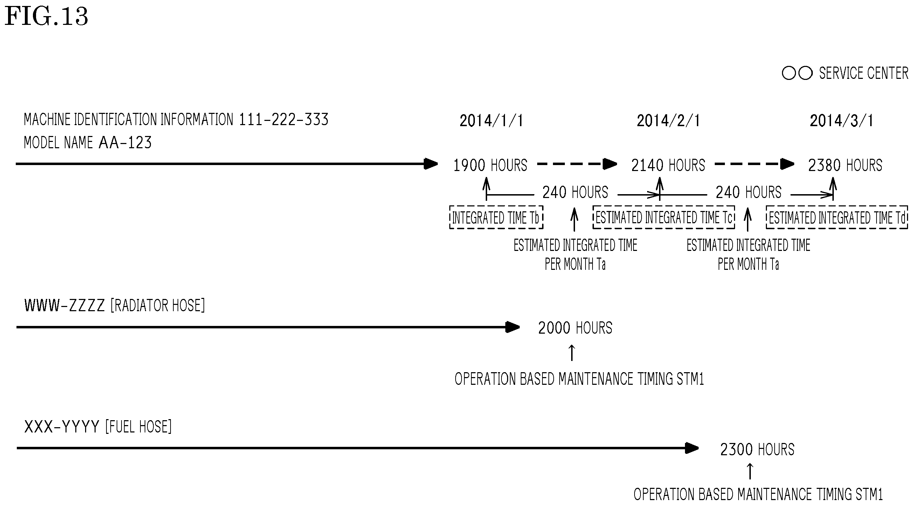

Fig. 13 is an explanation diagram illustrating an example of repair timing determination processing of determining a repair part as well as a repair timing and a quantity thereof, based on the operation based maintenance timing STM1.

As illustrated in Fig. 13, the repair timing determination unit P8 calculates estimated integrated time Ta per month (240 hours) as average monthly integrated time. For example, the calculation is based on the past integrated time (for example, integrated time from the delivery to the present) of the work machine 110 (machine identification information 111-222-333, model name AA-123), and used days (for example, the number of days from the delivery day to the present) corresponding to the integrated time. Then, the estimated integrated time Ta (240 hours) per month thus calculated is added to the integrated time Tb (1900 hours) of the work machine 110 (machine identification information 111-222-333, model name AA-123) of the current month (January 2014). Thus, estimated integrated time Tc (2400 hours) of the work machine 110 of the next month (February 2014) is calculated. Then, the repair timing determination unit P8 determines for each service center information N, the repair part (more specifically, the WWW-ZZZZ [radiator hose] of the work machine 110 (model nameAA-123), the operation based maintenance timing STM1 (see Fig. 9) of which is 2000 hours) corresponding to the operation based maintenance timing STM1 as one of the operation based maintenance timings STM1 that is within a counting period between the integrated time TB (1900 hours) of the current month (January 2014) and the estimated integrated time Tc (2140 hours) of the next month (February 2014), a repair timing (January 2104) thereof, and a quantity of the repair part required for the work machine 110 at the repair timing.

For example, the repair timing determination unit P8 calculates estimated integrated time Td (2380 hours) of the month after next (March 2014) of the work machine 110, by adding the estimated integrated time Ta (240 hours) per month to the integrated time Tb (2140 hours) of the next month (February 2014) of the work machine 110 (machine identification information 111-222-333, model name AA-123). Then, the repair timing determination unit P8 determines for each service center information N, the repair part (more specifically, the XXX-YYYY [fuel hose] of the work machine 110 (model nameAA-123), the operation based maintenance timing STM1 (see Fig. 9) of which is 2300 hours) corresponding to the operation based maintenance timing STM1 as one of the operation based maintenance timings STM1 that is within a counting period between the estimated integrated time Tc (2140 hours) of the next month (February 2014) and the estimated integrated time td (2380 hours) of the month after next, a repair timing (February 2014) thereof, and a quantity of the repair part required for the work machine 110 at the repair timing.

The repair timing determination unit P8 can similarly determine another repair member as well as a repair timing and quantity thereof in the current month or in the next month and after. The repair timing determination unit P8 can similarly determine the repair part as well as the repair timing and the quantity thereof also with the preset based maintenance timing STM2.

The notification control unit P9 notifies the service center, identified by the service center identifying unit P7, that the repair part is required at a timing (for example, a timing taking into consideration a delivery timing of the repair part) earlier than the repair timing (the earliest repair timing when there are a plurality of repair timings as in the example illustrated in Fig. 13) determined by the repair timing determination unit P8, by a predetermined period.

More specifically, the notification control unit P9 transmits to the terminal device 160 of the service center identified by the service center identifying unit P7, the information on the repair part as well as the repair timing and the quantity thereof determined for each service center information N by the repair timing determination unit P8. Furthermore/alternatively, the information is transmitted through an email to the mobile receiver (for example, a mobile phone) of a staff such as a serviceman, in the service center, in charge of the work machine 110. Furthermore/alternatively, the printing unit 137 of the remote server 130 prints the information for each service center identified by the service center identifying unit P7.

The control unit 161 in the terminal device 160 (see Fig. 1) of the service center displays on a display screen of the display unit 163 of the terminal device 160, the information, on the repair part as well as the repair timing and the quantity thereof, transmitted from the remote server 130. Furthermore/alternatively, the mobile receiver (for example, a mobile phone) of the staff of the service center receives the email, indicating the repair part as well as the repair timing and the quantity thereof, transmitted from the remote server 130. When the information on the repair part as well as the repair timing and the quantity thereof for each service center information N is printed for each service center by the printing unit 137 in the remote server 130 in the remote monitoring center 120, the report printed for each service center by the printing unit 137 in the remote server 130 is manually sent to the corresponding service center.

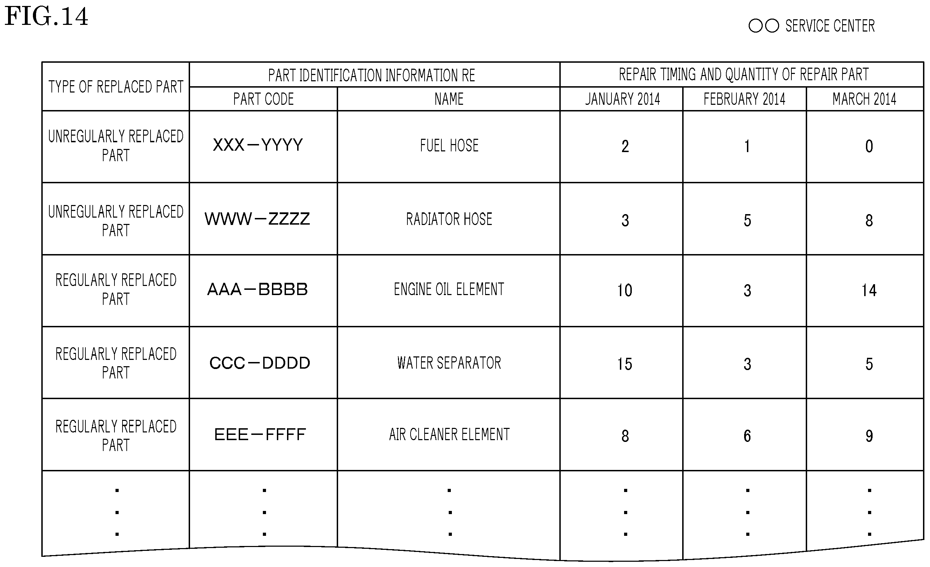

Fig. 14 is a table illustrating examples of the repair part as well as the repair timing and the quantity thereof notified to the service center, together with the types of replaced parts.

As illustrated in Fig. 14, at the repair timings in January, February, and March 2014 in the service center (OO service center), the estimated number of repair parts required for the XXX-YYYY [fuel hose], as the unregularly replaced part, is respectively two, one, and zero, the estimated number of repair parts required for the WWW-ZZZZ [radiator hose], as the unregularly replaced part, is respectively three, five, and eight, and the estimated number of repair parts required for the AAA-BBBB [engine oil element], as the regularly replaced part, is respectively 10, 3, and 14. Furthermore, at the timings, the estimated number of repair parts required for the CCC-DDDD [water separator], as the regularly replaced part, is respectively 15, 3, and 5, and the estimated number of repair parts required for the EEE-FFFF [air cleaner element], as the regularly replaced part, is respectively eight, six, and nine. Thus, the parts can be order with reference to such data in the service center.

### (Example of processing executed by control unit in remote server)

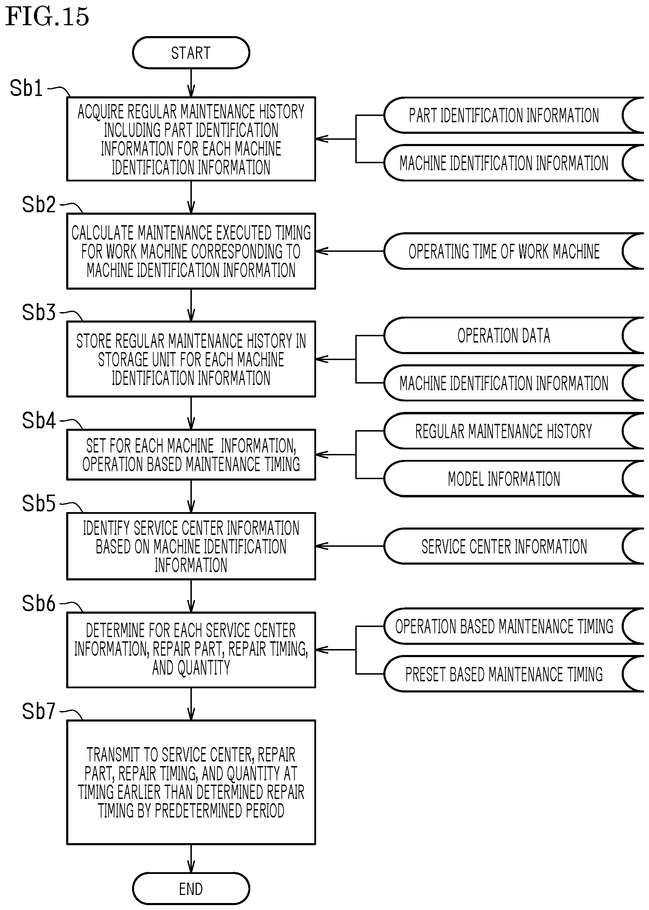

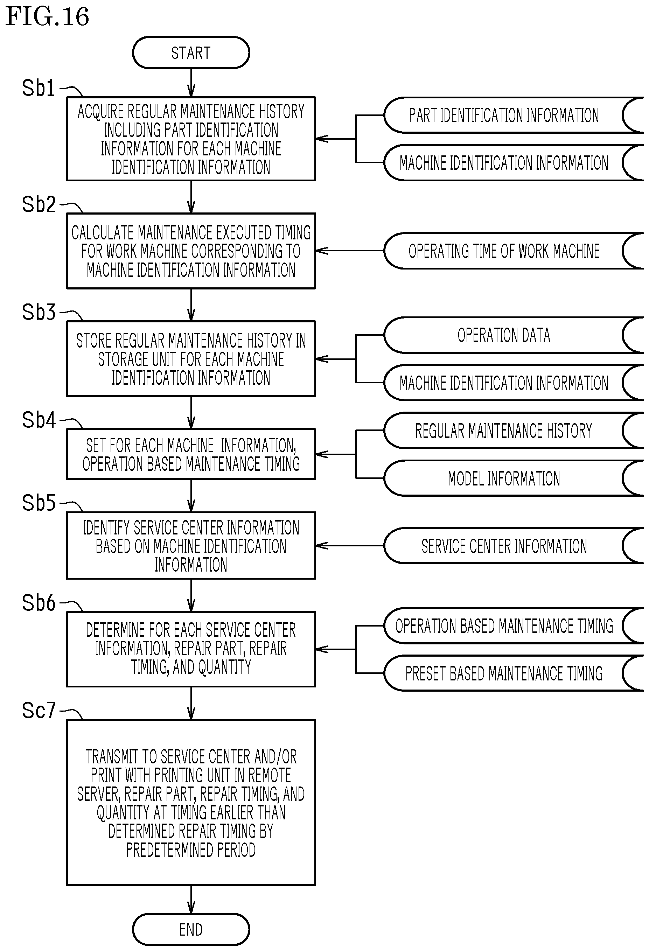

Next, an example of processing executed by the control unit 132 in the remote server 130 is described below with reference to Figs. 15 and 16.

Regarding the remote server 130, a case where manual processing is executed through a screen based instruction on the display unit 136 from the input unit 135, and a case where monthly batch processing is executed are separately described below.

### (Case where processing is executed through screen based instruction)

Fig. 15 is a flowchart illustrating an example of control processing executed by the control unit 132 in the remote server 130 in the case where the processing is executed through a screen based instruction.

Before the flowchart illustrated in Fig. 15 is executed, the control unit 132 is in a state where the operation data reception control unit P1 has received the operation data for each machine identification information SD (for example, a terminal phone number) from the operation data transmission control unit 241 in each of the work machines 110, ..., and stored the operation data in the storage unit 134. Furthermore, the preset based maintenance timing STM2 has been set (stored) in the storage unit 134 by the preset based maintenance timing setting unit P6 (see Fig. 11).

In the flowchart illustrated in Fig. 15, the control unit 132 first of all causes the maintenance history acquisition unit P2 to acquire the regular maintenance history HI, including the part identification information RE, together with the machine identification information SD, from the input unit 162, the input unit 280, or the input unit 135 (step Sb1).

Then, the control unit 132 causes the maintenance executed timing calculation unit P3 to calculate as the maintenance executed timing information TM based on the operating time of the work machine 110, the integrated time of a maintenance part corresponding to the part identification information RE on the work machine 110 corresponding to the machine identification information acquired in step Sb1 (step Sb2).

Then, the control unit 132 causes the maintenance history storage control unit P4 to store the regular maintenance history HI, including the part identification information RE acquired in step Sb1 and the maintenance executed timing information TM calculated in step Sb2, in the storage unit 134 for each machine identification information SD, together with the operation data as one of pieces of the operation data stored in the storage unit 134 that corresponds to the part identification information RE and the maintenance executed timing information TM (see Fig. 8) (step Sb3).

Then, the control unit 132 causes the operation based maintenance timing setting unit P5 to set for each model information MA, the operation based maintenance timing STM1 from the maintenance executed timing information TM (part replacement time information) corresponding to the part identification information RE in the regular maintenance history HI and the operation data stored in the storage unit 134 in step Sb3 (see Fig. 9) (step Sb4).

Then, the control unit 132 causes the service center identifying unit P7 to use the service center information N set in advance while being associated with the machine identification information SD (see Fig. 12) to identify the service center information N based on the machine identification information SD (for example, a terminal phone number) of each of the work machines 110, ... (step Sb5).

Then, the control unit 132 causes the repair timing determination unit P8 to determine for each service center information N identified in step Sb5, a repair part (a repair part for an unregularly replaced part required in the service center) corresponding to the operation based maintenance timing STM1as one of the operation based maintenance timings STM1 set in step Sb4 that is within the counting period, as well as the repair timing and the quantity thereof, and a repair part (a repair part for a regularly replaced part required in the service center) corresponding to the preset based maintenance timing STM2 as one of the preset based maintenance timings STM2 set in advance that is within the counting period, as well as the repair timing and the quantity thereof (step Sb6).

Then, at a timing earlier than the repair timing determined in step Sb6 by a predetermined period, the notification control unit P9 of the control unit 132 transmits the information on the repair part as well as the repair timing and the quantity thereof to the terminal device 160 of the service center identified in step Sb5 and/or to the mobile receiver (for example, the mobile phone) of the staff such as a serviceman, in charge of the work machine 110, in the service center through an email (step Sb7).

### (Case where monthly batch processing is executed)

Fig. 16 is a flowchart illustrating an example of control processing executed by the control unit 132 in the remote server 130 in the case where the monthly batch processing is executed. In the flowchart illustrated in Fig. 16, processing in steps Sb1 to Sb6 is the same as the counterpart in the flowchart illustrated in Fig. 15, and thus is denoted with the same reference signs and will not be described.

In step Sc7, at a timing earlier than the repair timing determined in step Sb6 by a predetermined period, the control unit 132 causes the notification control unit P9 to transmit the information on the repair part as well as the repair timing and the quantity thereof to the terminal device 160 of the service center identified in step Sb5 and/or to the mobile receiver (for example, the mobile phone) of the staff such as a serviceman, in charge of the work machine, in the service center through an email, and/or to print the information with the printing unit 137 in the remote server 130.

### (Notification to procurement department and production plant)

In the present embodiment, the control unit 132 in the remote server 130 may further notify a procurement department and/or a production plant of a repair part and a repair timing and that the repair part is required at a timing (for example, a timing taking into consideration the production time for the repair part) that is earlier by a predetermined period.

In this configuration, the terminal device 160, connected to the remote server 130 through the network 150, is provided in the procurement department and/or the production plant.

The repair timing determination unit P8 determines the timings and the quantity of the repair parts for all the service centers, by summing up the quantity of the repair part for each service center for each repair timing (counting period in this example).

The notification control unit P9 transmits the information on the repair part as well as the repair timing and the quantity thereof, determined by the repair timing determination unit P8, to the terminal device 160 disposed in the procurement department and/or the production plant and/or prints the information with the printing unit 137 in the remote server 130.

The control unit 161 in the terminal device 160 in the procurement department and/or the production plant displays on the display screen of the display unit 163 in the terminal device 160, the repair part as well as the repair timing and the quantity thereof transmitted from the remote server 130. When the information on the repair part as well as the repair timing and the quantity thereof for each service center information N is printed with the printing unit 137 in the remote server 130, the report thus printed by the printing unit 137 in the remote server 130 is manually sent to the procurement department and/or the production plant, in the remote monitoring center 120.

### (Operation and effect of the present embodiment)

As described above, in the present embodiment, a service center in charge of the work machine 110 is identified based on the machine identification information SD, a repair part required in the service center and a repair timing of the repair member are determined based on the regular maintenance history HI and operation data received from the work machine 110, and the service center is notified that the repair part is required at a timing earlier than the repair timing determined by a predetermined period. In this manner, a stocking location (more specifically, a service center) where the repair part for repairing is required can be identified. Thus, the repair part required in the service center can be appropriately secured in advance, whereby the shorter delivery waiting time can be achieved so that a maintenance service can be swiftly performed.

In the present embodiment, the procurement department and/or the production plant is further notified of the repair part and the repair timing and that the repair part is required at the timing earlier by the predetermined period. Thus, in the procurement department and/or the production plant, a cost can be reduced with repair parts procured in a concentrated amount and production plan management can be facilitated. All things considered, the information is used as information facilitating the production plan, whereby the shortage of the repair part, overproduction, and inventory risk are less likely to occur.

### (Other embodiments)

The remote monitoring system 100 according to the present embodiment is applied to a traveling work machine such as a combine harvester, a tiller, and a rice transplanter. However, this should not be construed in a limiting sense, and the remote monitoring system 100 can be suitably applied also to a traveling work machine such as a construction machine including a tractor, an excavator, a wheel loader, and a carrier, and also to a vessel such as a pleasure boat and a fishing boat.

The present invention is not limited to the embodiment described above, and can be implemented in other various forms. Thus, the embodiment is exemplary in every respect, and should not be construed as limiting. The scope of the present invention is defined by claims, and is not limited in any way by the description in the specification. The scope of the present invention encompasses any change and modification within a scope equivalent to the scope of claims.

The present application claims priority based on Patent Application No. 2014-045372 filed in Japan on March 7, 2014, the content of which is herein incorporated by reference.

### Industrial Applicability

The present invention relates to a remote server that receives from a work machine or a vessel, machine identification information, as information for identifying the work machine or the vessel, and predetermined operation data, and is particularly applicable for identifying a stocking location where a repair part for repairing is required. Reference Signs List

- 100: Remote monitoring system
- 110: Work machine
- 111: Work unit
- 111a: Traveling work unit
- 112: Engine
- 113: Electronic control device
- 113a: Engine controller
- 114: Generator
- 120: Remote monitoring center
- 130: Remote server
- 131: Communication unit
- 132: Control unit
- 133: Processing unit
- 134: Storage unit
- 135: Input unit
- 136: Display unit
- 137: Printing unit
- 140: Communication network
- 150: Network
- 160: Terminal device
- 161: Control unit
- 162: Input unit
- 163: Display unit
- 200: Remote monitoring terminal device
- 210: Communication unit
- 220: Power source control unit
- 231: GPS sensor
- 232: Position detection unit
- 233: Operation data storage unit
- 240: Control unit
- 241: Operation data transmission control unit
- 241a: Data acquisition unit
- 241b: Data storage control unit
- 241c: Data transmission unit
- 250: Processing unit
- 260: Storage unit
- 270: Time acquisition timer
- 280: Input unit
- 290: Display unit
- BT: Battery
- DB1: First database
- DB2: Second database
- DB3: Third database
- HI: Regular maintenance history
- L1: Power source connection line
- L2: Power source connection line
- L3: Power source connection line
- L4: Power source connection line
- MA: Model information
- N: Service center information
- P1: Operation data reception control unit
- P2: Maintenance history acquisition unit
- P3: Maintenance executed timing calculation unit
- P4: Maintenance history storage control unit
- P5: Operation based maintenance timing setting unit
- P6: Preset based maintenance timing setting unit
- P7: Service center identifying unit
- P8: Repair timing determination unit
- P9: Notification control unit
- RE: Part identification information
- SD: Machine identification information
- STM1: Operation based maintenance timing
- STM2: Preset based maintenance timing
- SW: Starting switch
- T: Connection terminal
- TM: Maintenance executed timing information
- Ta: Estimated integrated time
- Tb: Integrated time
- Tc: Estimated integrated time
- Td: Estimated integrated time

## Claims

1. A remote server that receives from a work machine or a vessel, machine identification information as information for identifying the work machine or the vessel and predetermined operation data, wherein a service center in charge of the work machine or the vessel is identified based on the machine identification information, a repair part required in the service center and a repair timing of the repair member are determined based on the operation data received from the work machine or the vessel and on any one of a regular maintenance history received as appropriate and the regular maintenance history received from the work machine or the vessel, and the service center is notified that the repair part is required at a timing earlier than the repair timing determined by a predetermined period.

2. The remote server according to claim 1, wherein the remote server further notifies a procurement department and/or a production plant of the repair part and the repair timing and that the repair part is required at the timing earlier than the repair timing by the predetermined period.
